# EUROPEAN PATENT SPECIFICATION

(11) **EP 3 548 569 B1**
(45) Date of publication and mention of the grant of the patent: **24.03.2021**
(21) Application number: 17818680.5
(22) Date of filing: 30.11.2017
(51) Int. Cl.: C09D 127/18, C08L 71/02

(54) **FLUOROPOLYMER COATING COMPOSITION**
FLUORPOLYMER ÜBERZUGZUSAMMENSETZUNG
COMPOSITION DE REVÊTEMENT À BASE DE POLYMÈRE FLUORÉ

(30) Priority: 01.12.2016 JP 2016234033; 28.09.2017 JP 2017187671
(43) Date of publication of application: 09.10.2019
(73) Proprietor: The Chemours Company FC, LLC, Wilmington, DE 19801 (US); Chemours-Mitsui Fluoroproducts Co., Ltd., Tokyo 105-0001 (JP)
(72) Inventor: PHAM, Hoai-Nam, Shizuoka-Shi Shizuoka 424-8631 (JP); TERAO, Takumi, Shizuoka-Shi Shizuoka 424-8631 (JP); ITO, Miki, Shizuoka-Shi Shizuoka 424-8631 (JP); TANI, Yuta, Tokyo 104-0053 (JP)
(74) Representative: Heinemann, Monica
(86) International application number: PCT/US2017/063848
(87) International publication number: WO 2018/102494

(56) References cited:
- EP-A1- 0 705 671
- EP-A1- 2 479 216
- EP-A2- 1 734 090
- WO-A1-98/16361
- WO-A1-2009/068235
- JP-A- 2003 027 004
- JP-A- 2008 231 387
- US-A- 5 700 861

## Description

### BACKGROUND OF THE INVENTION

### Field of the Disclosure

The present invention relates to a mold coated with a fluoropolymer coating composition, and particularly relates to a mold coated with a fluoropolymer coating composition with excellent durability and wear resistance that is able to sustain non-adhesiveness and releasability of a coating film for a long period of time.

### Description of Related Art

Fluoropolymers have excellent heat resistance, chemical resistance, electrical properties, and mechanical properties, and have low coefficients of friction as well as non-adhesiveness and water and oil repellency. Fluoropolymers are therefore widely used in all types of industrial fields such as chemical, machinery, electrical machinery industries, and the like. Because melt-processable fluoropolymers particularly demonstrate fluidity at a temperature above a melting point, the generation of pin holes can be suppressed when formed into a coating, and thus the fluoropolymers are used as coating compositions for fluoropolymer coatings.

Fluoropolymer coatings utilizing the non-adhesiveness and water and oil repellency of fluoropolymers are used in cookware such as frying pans, rice cookers, and the like, office automation (OA) equipment such as fixing rolls/belts for fixing toners, and the like, and other various fields, and because these coatings have further spread to other fields of use such as inkjet nozzles and chemical plant equipment, there is a demand for coatings with enhanced and more durable non-adhesiveness and water and oil repellency.

For example, an aqueous dispersion composition made from: a compound having a perfluoroalkyl group; a fluoro oil; a repellent selected from fluorine oil, fluorosilicone oil, and the like; an organic silicon compound; and a resin containing fluorine is disclosed in Patent Document 1 described below as a coating agent for granting waterproofing effects to the surfaces of porous civil engineering building materials, such as concrete, and the like. Furthermore, a coating composition formed by mixing an aqueous dispersion of polytetrafluoroethylene with an aqueous dispersion of perfluoropolyether is disclosed in Patent Document 2 described below as a coating composition for vehicle painted surfaces.

Meanwhile, to enhance releasability when a polymer material, such as plastic or rubber, ceramic, cement, and the like, are formed using a mold, it is well known that, by utilizing the aforementioned non-adhesiveness that fluoropolymers possess, a fluoropolymer coating can be formed on (Patent Documents 3 and 4), or a releasing agent made from a fluorine compound can be applied to, a mold surface (Patent Documents 5 and 6).

### Prior Art Documents

Patent Document 1: Japanese Patent No. 3505719
Patent Document 2: Japanese Patent No. 4116763
Patent Document 3: Japanese Unexamined Patent Application Publication No. 2002-516618
Patent Document 4: Japanese Unexamined Patent Application Publication No. 2004-74646
Patent Document 5: Japanese Patent No. 2658172
Patent Document 6: Japanese Unexamined Patent Application Publication No. 2011-63709

### SUMMARY OF THE INVENTION

### Problem to be Resolved by the Invention

However, conventional fluoropolymer coatings formed on mold surfaces have a problem in that such coatings lose releasability when molding is done repeatedly, and are thus as yet not fully satisfactory in terms of durability. Meanwhile, releasing agents have to be re-applied each time, or every few times, molding is performed and are thus as yet not fully satisfactory in terms of productivity.

Accordingly, an object of the present invention is to provide a coating film having excellent durability and wear resistance that, when applied to a mold surface, is able to express excellent releasability (non-adhesiveness) over a long period of time, and a coating composition that is able to form such a coating film.

### Means for Solving the Problems

The present invention provides a mold coated with a film made from a fluoropolymer coating composition containing a fluoropolymer and a fluoro oil dispersed in the coating composition, where the decomposition temperature of the fluoro oil is higher than the melting point of the fluoropolymer.

In the fluoropolymer coating it is preferable that;
1. The fluoro oil is contained in an amount such that the oil is 1 to 35 wt% of a total amount of a polymer solid content and the fluoro oil in the coating composition,
2. The decomposition temperature of the fluoro oil is at least 10°C higher than the melting point of the fluoropolymer,
3. The fluoro oil is dispersed in the coating composition, with an average particle diameter of 20 µm or less,
4. The composition contains a surfactant,
5. The fluoropolymer is a melt-processable perfluoropolymer,
6. The composition contains a filler,
7. The filler is contained in an amount such that the filler is 0.1 to 10wt% based on a coating solid content,
8. The composition is a water based coating or a powder coating, and
9. The composition is for top coating.

According to the present invention, after the fluoropolymer coating composition is painted, a coating film forming method - characterized in that said method heat treats to a temperature of at least a melting point of the fluoropolymer - is provided.

Additionally, according to the present invention, a coating film is on a surface of a mold, where the film is made from the fluoropolymer coating composition and fluoro oil is dispersed in the film.

Thus the present invention provides a mold, characterized in that the coating film is formed on a surface thereof.

### Effect of the Invention

A coating film excelling in releasability (non-adhesiveness) more so than fluoropolymer coating compositions used up to now, and having durability - superior to the durability of conventional releasing agents or coating compositions able to form coating films having releasability - able to express excellent releasability (non-adhesiveness) over a long period of time can be formed from the coating composition provided herein.

Furthermore, a mold according to the present invention has excellent molded article releasability, and thus has excellent formability. Furthermore, the mold can sustain said releasability over a long period of time, and thus productivity is also excellent.

### DETAILED DESCRIPTION OF THE INVENTION

### Coating Composition

An important characteristic of the coating composition used to coat the mold of the present invention is that the composition contains a fluoropolymer and fluoro oil, where the decomposition temperature of the fluoro oil is higher than the melting point of the fluoropolymer.

That is, because if a fluoro oil that is in a fluid state at room temperature is included in the coating composition, the fluoro oil seeps into a formed fluoropolymer oating film surface, making it possible to further enhance a non-adhesiveness of a fluoropolymer coating film.

Furthermore, the fluoro oil used in the present invention has a decomposition temperature that is higher than the melting point of the fluoropolymer, and thus, even if heat treated at a temperature around the melting point of the fluoropolymer, the fluoro oil will not decompose and volatilize into a gas. As a result, not only will the aforementioned effect, brought on by the fluoro oil, not be impaired, the generation of coating film defects, such as bubble marks, caused by the volatilization of the fluoro oil, is effectively prevented.

Furthermore, as will be described later, in the present invention, because the fluoro oil is present in a state where said oil is dispersed in the coating composition, the fluoro oil is also present in a state where the oil is dispersed inside a formed coating film. Therefore, when the coating film is worn due to use, the fluoro oil inside the coating film gradually seeps to the surface thereof, thus making it possible to express a high level of non-adhesiveness over a long period of time.

To effectively achieve the aforementioned effect, obtainable because the fluoro oil is in a state where said oil is dispersed in the coating film, an average particle diameter of fluoro oil particles dispersed in the coating composition is preferably 20 µm or less, and particularly preferably 10 µm or less. Note that the method for measuring the average particle diameter will be described later.

In the present invention, as was described above, it is important that the decomposition temperature of the fluoro oil be higher than the melting point of the fluoropolymer, and, specifically, is thus preferably at least 10°C higher, more preferably at least 30°C higher, and even more preferably at least 50°C higher than the melting point of the fluoropolymer. Therefore, effects on the fluoro oil during coating film forming with heat treating can be reliably reduced, thus ensuring further enhancement of the non-adhesiveness of the coating film by the fluoro oil.

Note that the melting point of the fluoropolymer according to the present invention is the temperature corresponding to the melting peak measured using a Differential Scanning Calorimeter (DSC) based on ASTM D3307, that the decomposition temperature of the fluoro oil is the temperature derived by calculating the results of a thermal gravity measurement (TGA) using the method disclosed in JIS K7120, and that the detailed measuring methods will be described later in the examples.

Furthermore, by including fluoro oil in the coating composition according to the present invention, wear is reduced by fluoro oil that seeps to the coating film surface, thereby enhancing the wear resistance of the coating film. Additionally, by adding a filler to the coating composition, coupled with the presence of the fluoro oil, wear resistance can be further enhanced, such that the composition can express the excellent releasability described above over a long period of time. Therefore, forming the coating film on a mold surface leads to better productivity.

As long as the coating composition according to the present invention includes a combination of the aforementioned fluoropolymer and fluoro oil, the composition may be any form of water based coating composition, solvent based coating composition, or powder coating composition, while water based coating compositions or powder coating compositions are preferable from an environmental and cost perspective. Furthermore, powder coating compositions can be use to form very thick coating films.

### Fluoropolymer

Examples of fluoropolymers that can be used to configure the coating composition of the present invention include, but are not limited to, polytetrafluoroethylene (PTFE), tetrafluoroethylene and perfluoro(alkyl vinyl ether) copolymer (PFA), tetrafluoroethylene and hexafluoropropylene copolymer (FEP), tetrafluoroethylene hexafluoropropylene perfluoro (alkyl vinyl ether) copolymer, tetrafluoroethylene and ethylene copolymer, polyvinylidene fluoride, polychlorotrifluoroethylene and chlorotrifluoroethylene ethylene copolymer.

From the perspective of being able to suppress the generation of pin holes and obtain a uniform, smooth coating film when the coating film is formed, it is preferable that a melt-processable fluoropolymer exhibiting melt fluidity above the melting point thereof be used. From the perspective of coating film non-adhesiveness and heat resistance, it is preferable to use a melt-processable perfluoropolymer, such as a low molecular weight PTFE, PFA, FEP, or tetrafluoroethylene and hexafluoropropylene and perfluoro (alkyl vinyl ether) copolymer.

It is preferable that the alkyl group of the perfluoro(alkyl vinyl ether) in the PFA have 1 to 5 carbon atoms, where among these, perfluoro(propyl vinyl ether) (PPVE), perfluoro(ethyl vinyl ether) (PEVE), and perfluoro(methyl vinyl ether) (PMVE) are particularly preferable. It is preferable that the amount of perfluoro(alkyl vinyl ether) in the PFA be in a range of 1 to 50 wt%.

### Fluoro Oil

The fluoro oil according to the present invention is an organic compound containing fluorine that is in the liquid phase at room temperature. Examples of the fluoro oil include, but are not limited to perfluoropolyethers (PFPE), perfluoroalkyl polyethers, and telomers of fluorinated monomers (for example, tetrafluoroethylene (TFE), ethylene trifluoride, vinylidene fluoride, chlorotetrafluoroethylene (CTFE), fluorinated acrylic monomers, and other fluorinated hydrocarbon compounds.

PFPE having small surface energy and able to efficiently enhance the non-adhesiveness of the coating film can be appropriately used in the present invention, and can be obtained using products going by the commercial names of Krytox™ (manufactured by Chemours Company) or DEMNUM™ (manufactured by Daikin Industries, Ltd.).

The fluoro oil in the coating composition according to the present invention is preferably contained in an amount such that the oil is 1 to 35 wt%, and preferably 5 to 20 wt%, of the total weight of a polymer solid content (weight of the fluoropolymer contained in the coating composition) and the fluoro oil in the coating composition. If the amount of the fluoro oil is below the aforementioned range, there is a risk that it will not be possible to enhance the non-adhesiveness of the coating film when compared to cases where said amount is within said range. Meanwhile, when the amount of the fluoro oil is above the aforementioned range, there is a risk that coating film defects may occur more readily.

Furthermore, it is preferable that the contained amount of the fluoropolymer be at least 80 wt%, and particularly preferably at least 90 wt%, based on a coating solid content (the entire solid content left behind as the coating film excluding the fluoro oil) of the coating composition, and this amount is preferable from the perspective of adequately providing the coating film with the characteristics described above, those characteristics being the heat resistance and chemical resistance, possessed by fluoropolymers.

### Preparation of the Coating Composition

While, as was described above, the coating composition may be any form of water or solvent based coating composition or powder coating composition, the composition is, from an environmental perspective, preferably a water based coating composition or powder coating composition. Furthermore, examples of methods for preparing the coating composition include, but are not limited to, the methods described below.

When the coating composition according to the present invention is prepared as a water based coating composition, the composition can be prepared using a method that mixes fluoro oil, and optionally other additives to be described later, in an aqueous dispersion of fluoropolymer and a liquid mixture (for example, an existing fluoropolymer water based coating, or the like) thereof, or using a method that mixes a powder of a fluoropolymer in fluoro oil and an aqueous solvent together with other additives.

Furthermore, when the coating composition according to the present invention is prepared as a solvent based coating composition, the composition can be prepared using a method that mixes a powder of a fluoropolymer in fluoro oil and a solvent along with other additives, or using a method that adds fluoro oil and other additives to a fluoropolymer solution.

Additionally, when the coating composition according to the present invention is prepared as a powder coating composition, the composition can be prepared using a method that coagulates (co-coagulates) a fluoropolymer aqueous dispersion and fluoro oil simultaneously to obtain a composite fluoropolymer powder.

The fluoropolymer aqueous dispersion used in the coating composition according to the present invention can be prepared by dispersing the fluoropolymer evenly and stably in an aqueous solution using a surfactant, and the like, or by polymerizing the fluoropolymer with a water based emulsion using a surfactant and an initiator, or a chain transfer agent or the like, as necessary.

It is preferable that fluoropolymer particles having an average particle diameter of 0.01 to 180 µm be dispersed in the fluoropolymer aqueous dispersion until said particles are 10 to 70 wt% of the aqueous solution.

While the fluoropolymer aqueous dispersion can be used as-is in the coating composition according to the present invention, a filler and a variety of additives, for example, surfactants (examples thereof include polyoxyethylene alkyl ether, polyoxyethylene alkyl phenyl ether type nonionic surfactants; such as LIOCO™ manufactured by LION, Inc., the TRITON™ and TERGITOL™ series manufactured by the Dow Chemical Company, and EMALGEN™ manufactured by KAO, Inc., sulfosuccinates; such as REPAL™ manufactured by LION, Inc., EMAL™, PELEX™, manufactured by KAO, Inc.; and polycarboxylate, acrylic salt type polymer surfactants, such as alkyl ether sulfonic acid sodium salts, sulfate mono-long chain alkyl based anionic surfactants, LEOAL™ manufactured by LION, Inc., OROTAN™ manufactured by the Dow Chemical Company), film forming agents (examples include polymeric film forming agents such as polyamides, polyamide imides, acrylics, acetates; higher alcohols and ethers; polymeric surfactants having a film forming effect), and thickeners (examples include soluble celluloses, solvent dispersion thickeners, sodium alginates, caseins, sodium caseinates, xanthan gums, polyacrylic acids, acrylic esters) used in normal coatings can be added thereto according to required characteristics, such as dispersibility, conductivity, foaming prevention and improved wear resistance.

### Aqueous Coating Composition

The water based coating composition can be prepared by adding fluoro oil to the fluoropolymer aqueous dispersion prepared using the aforementioned method or an aqueous composition liquid thereof such that the fluoro oil is 1 to 35 wt% with respect to a total weight of the polymer solid content (weight of the fluoropolymer contained in the coating composition) and the fluoro oil in the coating composition, and then by mixing and stirring the dispersion or liquid.

While the fluoro oil can be used in the coating composition according to the present invention alone, as was described above, it is preferable that a surfactant be used in combination therewith so that the fluoro oil can be well dispersed in the composition.

While any conventionally well-known surfactant can be used as the surfactant for enhancing the dispersibility of the fluoro oil, because the fluoro oil can be dispersed to a high degree, particularly in the present invention, through the use of a surfactant with excellent affinity to the fluoro oil, it is preferable that a fluorine based surfactant containing fluorine be used.

Examples of such surfactants include, but are not limited to, anion type fluorine type surfactants, such as fluoroalkyl carboxylates, fluoroalkyl sulfonates, fluoroalkyl phosphate esters, fluoroalkenyl sulfonates, fluoroalkenyl carboxylates; amphoteric fluorosurfactants, such as perfluoroalkyl betaines, perfluoroalkyl amine oxides; cationic fluorochemical surfactants, such as fluoroalkyl trimethyl ammoniums, and the like; nonion type fluorosurfactants, such as fluoroalkyl ethylene oxide adducts, fluoroalkyl propylene oxide adducts, fluoroalkyl group-containing oligomers.

To ensure the fluoro oil is well dispersed, it is preferable that the amount of surfactant added be 1 to 150 parts by weight, and more preferably 5 to 100 parts by weight, with respect to each 100 parts by weight of the fluoro oil.

Furthermore, when the aforementioned surfactant is used, it is preferable that the fluoro oil be diluted using a fluorinated solvent, and that the viscosity of the fluoro oil be lowered. Therefore, when the fluoropolymer is mixed and stirred, it is possible to obtain a dispersion in which the fluoro oil is well dispersed.

Examples of the fluorinated solvent used to dilute the fluoro oil include hydrofluorocarbons (HFC), perfluorocarbons (PFC), hydrochlorofluorocarbons (HCFC), chlorofluorocarbons (CFC), hydrofluoroolefins (HFO), hydrochlorofluoroolefins (HCFO) and hydrofluoroethers (HFE).

It is preferable that the amount of fluorinated solvent that is added be 100 to 500 parts by weight for every 100 parts by weight of the fluoro oil.

Furthermore, so that the fluoro oil is well dispersed, it is preferable that the oil be dispersed using ultrasonic dispersion or a high shear rate, in conjunction with using said surfactant. A commonly used ultrasonic disperser, stirrer, or a variety of homogenizers (high pressure, high speed, ultrasonic) can be used for these dispersions. Through the use thereof, the fluoro oil can be well dispersed without being diluted using a fluorinated solvent, which is preferable from the perspective that doing so simplifies the process and lowers costs related to the use of the fluorinated solvent. Furthermore, the dispersion described above can naturally be done after the fluoro oil has been diluted with the fluorinated solvent, and better dispersion would be expected as a result of doing so.

### Solvent Based Coating Composition

Furthermore, in the case of a solvent based coating composition, a fluoropolymer solution or a fluoropolymer solvent solution is prepared, the fluoro oil, or preferably the fluoro oil dispersion described above, is added to this solution such that the amount of thereof is 1 to 35 wt% of the total weight of the polymer solid content (weight of the fluoropolymer contained in the coating composition) and the fluoro oil in the coating composition, and then the composition can be prepared by stirring and mixing.

### Powder Coating Composition

The powder coating composition is created by adding fluoro oil, and preferably the aforementioned fluoro oil dispersion, to the fluoropolymer aqueous dispersion prepared using the aforementioned method so that the amount thereof is 1 to 35 wt% of the total weight of the polymer solid content (weight of the fluoropolymer contained in the coating composition) and the fluoro oil in the coating composition, and then by stirring to co-coagulate the fluoropolymer and the fluoro oil. After granulating the coagulated granules by stirring the granules for 10 to 60 minutes at a stirring speed of 100 to 500 rpm so that average particle diameter becomes 1 to 200 µm, the fluoro oil is made - through separating, washing, and drying - to fill voids in primary particles of the fluoropolymer, and thus a composite powder of the fluoropolymer and the fluoro oil in which the fluoro oil is uniformly present can be prepared. Large, coarse particles with particle diameters of at least 200 µm generated by coagulation or over-granulation can be crushed into fine particles as necessary.

Note that it is preferable that an electrolytic material, such as HCl, H₂SO₄, HNO₃, H₃PO₄, Na₂SO₄, MgCl₂, CaCl₂, HCOONa, CH₃COOK, (NH₄)₂CO₃, be added to cause the fluoropolymer primary particles to be chemically coagulated. Furthermore, it is preferable to add an organic solvent incompatible with water (preferably a fluorinated solvent) as needed so as to uniformly granulate the coagulated particles.

### Other Fillers

A variety of organic and inorganic fillers can be added to the coating composition according to the present invention, based on the characteristics required thereof. Examples of organic fillers include engineering plastics, such as polyarylene sulfide, polyether ether ketone, polyamide, polyimide, and the like. Examples of inorganic fillers include metal powder, metal oxide (aluminum oxide, zinc oxide, tin oxide, titanium oxide), glass, ceramic, silicon carbide, silicon oxide, calcium fluoride, carbon black, graphite, mica, barium sulfate. Fillers having a variety of shapes, such as particle shaped, fiber shaped, flaked shaped fillers, can be used as the shape of the filler.

As was described above, while wear resistance is enhanced by the presence of fluoro oil in the coating composition according to the present invention, wear resistance is further enhanced by the addition of the filler. Examples of particularly preferable fillers include, but are not limited to, silicon carbide (SiC), silica, and polyimide (PI).

While the added amount of the filler depends on the filler used and thus cannot be specified definitively, it is preferable to add an amount such that the filler is in a range of 0.1 to 10 wt% based on the coating solid content (the entire solid content left behind as the coating film excluding the fluoro oil, that is, an amount with respect to the total amount of the fluoropolymer and the filler) of the coating composition. When the amount of added filler is below this range, the enhancement of wear resistance due to the added filler becomes poorer, meanwhile, when the amount is above this range, releasability is lower.

When the coating composition is a liquid coating such as a water based coating, the filler can be used by dispersing the filler in a liquid medium, such as water. When the coating composition is a powder coating, a method, such as dry blending that mixes the coating composition powder and the filler directly, or a co-coagulation method or the like where a filler is added to an aqueous dispersion and then stirred and coagulated together can be used.

### Coating Method

When the coating composition according to the present invention is a liquid (water or solvent based) coating composition, or a powder coating composition, such as a sprayed coating or dipped coating, the composition can be coated using a conventionally well-known coating method, such as electrostatic coating.

It is preferable that, after coating, the coating film is formed by subjecting the coated coating composition to heat treatment at or above the melting point of the fluoropolymer. This makes it possible to melt the coated coating composition causing it to flow and thus form an even coating film.

Examples of base materials subject to being coated with the coating composition according to the present invention preferably include, but are not limited to, base materials that can withstand heat treating, such as metal base materials, like aluminum, iron, stainless steel, glass, ceramic and heat resistant plastic base materials.

Because the coating composition has the excellent durability of the formed coating film and is thus able to maintain non-adhesiveness and releasability over a long period of time, the composition is particularly preferably used as a top coating for covering a surface of a forming mold.

While a thickness of a coating film of the top coating may be appropriately selected based on an application and a portion to which the film will be applied, coating so as to create a film thickness after heat treatment and melting process of at least 5 µm, and preferably at least 10 µm, is preferred. When the film thickness is less than this, there is a risk that forming a continuous film will become difficult causing defects in the coating film and leaving the coating film prone to rapid loss of performance (non-adhesiveness, water and oil repellency) due to wear.

It is preferable that, as has been described above, the coating composition according to the present invention be used in an outermost surface layer as a top coating and can be applied to a base material (mold surface) using the aforementioned method.

While the coating composition according to the present invention can be applied directly to a base material surface, surface adhesion may be increased by applying a surface chemical treatment or primer coating to the base material. A variety of engineering plastic resins (for example, polyimides, polyamides, polyamide imides, polyether imides, polyarylene sulfides, polyether ether ketones) highly adhesive with respect to base materials are preferably included as primer coatings. Furthermore, fluoropolymers, particularly PFA, are preferably included to enhance interlayer adhesion with the coating film produced by the coating composition according to the present invention. In order to make adhesion to both the coating film produced by the coating composition according to the present invention and the base material satisfactory, the percentage of the fluoropolymer in the primer coating is preferably 50 to 90 wt%, and the percentage of the engineering plastic resin and the filler in the primer is preferably 10 to 50 wt%.

### Coating Film

Because the coating film obtained using the coating composition according to the present invention has a high degree of non-adhesiveness and water and oil repellency, it is preferable that an oil contact angle be at least 60 degrees, and more preferably at least 70 degrees.

Furthermore, in consideration of making it possible to exhibit coating film non-adhesiveness (releasability) for a long period of time, it is preferable that the fluoro oil be included in the coating film such that the amount of said oil therein is 1 to 35 wt%, and particularly preferably 5 to 20 wt%, thereof.

While a film thickness of a coating film formed using the coating composition according to the present invention can be appropriately selected based on an application and a portion to which the film is to be applied, it is preferable that coating be done such that the film thickness after heat treatment and melting treatment, particularly when used in order to enhance the releasability of a mold, is at least 5 µm, and particularly preferably in a range of 5 to 300 µm. If the film thickness is thinner than the aforementioned range, there is a risk that continuous coating film formation will be impossible causing more coating film defects than when the thickness is in said range, there is also a risk that the coating film will lose performance (non-adhesiveness (releasability) and water and oil repellency) due to wear, meanwhile, economic efficiency is lost when the film thickness is thicker than in this range.

### EXAMPLES

### Measurement of Physical Properties

### Decomposition Temperature of the Fluoro Oil

The temperature of approximately 50 mg of fluoro oil was raised 10°C per minute from room temperature to 600°C in a nitrogen atmosphere using a thermogravimetric analyzing device (TGA2050: manufactured by TA Instruments, Inc.), and a temperature calculated using the method disclosed in JIS K7120 from an obtained temperature-weight curve was used as decomposition temperature.

### Melting Point of the Fluoropolymer

The temperature corresponding to a melting peak measured using a differential scanning calorimeter (Pyris1 Type DSC, manufactured by PerkinElmer, Inc.) in accordance with ASTMD 3307 was used as a melting point.

### State of Dispersion of the Fluoro Oil

### Particles in the Coating (Visual Observation)

The coating was checked visually, to confirm the state of dispersion of the fluoro oil. Judgment criteria are as described below.

Favorable dispersion: The fluoro oil is well dispersed, and no two layer separation due to sedimentation can confirmed visually within 30 minutes after stirring.

Inferior dispersion: It is possible to visually confirm that two layer separation due to sedimentation had begun within 30 minutes after stirring.

### Average Particle Diameter of the Fluoro Oil Particles in the Coating

Droplets of coating were dripped onto a glass slide (76 x 26 mm Micro slide glass, 1 to 1.2 mm thick, manufactured by Matsunami), and the slide was placed on an aluminum base material (50 mm x 100 mm, 1 mm thick) and then observed using a reflection mode of an optical microscope (KH-1300, manufactured by Hirox, Inc.). The fluoro oil particles were observed using photographs taken at magnifications of 2000 to 2500 times. An average value derived from a sample size of n = 20 was used as an average particle diameter.

### Coating Evaluation

### State of Coating Formation (Visual Observation)

An obtained coating film was observed visually to confirm the state thereof. Judgment criteria are as described below.
Favorable: There is no unevenness nor any defects in the coating film.
Defects present: There are defects in the coating film. (Part of the base material surface is exposed)
Unevenness present: While there are no defects (exposure of the base material surface), the film is not flat. Unevenness and undulations are visible. Oil Contact Angle
Contact angle (droplet size: approximately 2 µL) of n-hexadecane was measured using a fully automatic contact angle meter (Kyowa Interface Science Co., Ltd., DM-701) in a measurement environment of 25°C and humidity of 60%.

### Film Thickness Measurement

A coated base material was cut, and a cross section thereof was measured using an optical microscope.

### Soy Sauce & Sugar Test

A soy sauce and sugar blend (soy sauce to sugar = 50:50) for testing was produced. The aforementioned soy sauce and sugar blend was applied to a coating film produced by coating a primer and the coating composition of Examples 1 to 3 and Comparative Example 1, to be described later, onto an aluminum base material (50 mm x 100 mm, 1 mm thick), and to a surface (50 mm x 50 mm) of an uncoated aluminum base material (50 mm x 100 mm, 1 mm thick), and then, these materials were stacked and secured in two places using clips. Next, the materials were heat treated in an oven for 30 minutes at 120°C, and then for 30 minutes at 200°C, and were then cooled to room temperature. The peel strength of the stacked samples was measured using a tensile tester (Tensilon RTC-1310A, manufactured by Orientec) at a tensile rate of 20 mm / min., and an average value was derived from five samples.

To evaluate durability, the tested samples were washed with water, and then, the same samples were subjected to the aforementioned test repeatedly five times. Additionally, the repeatedly tested samples were heat treated in an oven for 30 hours at 250°C, and then, the same measurements were taken.

### Measurement of the Amount of Fluoro Oil in the Coating

An approximately 30 mg sample of the coating film was collected using scissors, and then, just as was done for the decomposition temperature measurement for the fluoro oil, the temperature of the sample was raised 10°C each minute from room temperature up to 600°C in a nitrogen atmosphere using a thermogravimetric analyzing device (TGA2050, manufactured by TA Instruments, Inc.). Because the decomposition temperature of the fluoropolymer in the coating film is higher than the decomposition temperature of the fluoro oil, a weight change in the range from the decomposition start temperature to the decomposition completed temperature of the fluoro oil was measured, and this change was then used to derive the fluoro oil remaining in the coating film.

### Tribometer (Coating Durability)

A contact and a sample were slid linearly using a TS501 (manufactured by Kyowa Interface Science Co., Ltd.) at a specified moving speed with a load of 100 g applied thereto, a frictional force during said sliding was measured, and a coefficient of friction was calculated. (Static Friction Coefficient, and Dynamic Friction Coefficient at 50th Cycle and 500th Cycle). The test conditions were as described below.
Load: 100 g
Moving speed: 10 mm / sec.
Moving distance per cycle (each way): 10 mm

### Coating Wear Resistance Test

Loss due to wear was measured using an NUS-ISO3 Suga Wear Testing Machine manufactured by Suga Test Instruments Co., Ltd. in accordance with JIS K5600-5-10 (test piece reciprocating method). The test conditions were as described below.
Load: 1 N
Number of reciprocations: 100
Abrasive paper used: Silicon carbide paper, P-600 grade

### Coating Process

A coating film for use in performance evaluation was produced using the following procedure.

### (1) Base Material Surface Treatment (Coating Film Cleaning)

The surface of an aluminum base material (JIS A1050 compliant material, 95 mm x 150 mm, 1 mm thick) was degreased using isopropyl alcohol, and then, a sandblaster (Numablaster SGF-4(A)S-E566, manufactured by Fuji Manufacturing Co., Ltd.) was used to subject the surface to roughening by shot blasting using #60 alumina (Showa Blaster, manufactured by Showa Denko KK).

### (2) Undercoating (Primer Application)

A coating was applied to the base material treated as described in (1) above using an air spray coating gun (W-88-10E2 ϕ 1 mm nozzle (manual gun)), manufactured by Anest Iwata Corporation) to spray a liquid primer coating PJ-YL902 (manufactured by Du Pont-Mitsui Fluorochemicals Co., Ltd.) at an air pressure of 2.5 to 3.0 kgf/cm². Coating was done so that a coated liquid mass was approximately 0.2 g (0.15 to 0.25 g) per sheet of base material, and then, drying was performed in a forced draft circulation furnace at 120°C for 15 minutes to form a coating film with a film thickness of 6 to 8 µm. The coating environment was 25°C with humidity of 60% RH.

### (3) Coating Formation by Overcoating

A coating was applied to the base material treated as described in (1) and (2) above using an air spray coating gun (W-88-10E2 ϕ 1 mm nozzle (manual gun), manufactured by Anest Iwata Corporation) to spray a liquid coating composition of an example to be described later at an air pressure of 2.5 to 3.0 kgf/cm². Coating was done so that a coated liquid mass was approximately 0.2 g (0.15 to 0.25 g) per sheet of base material, and then, drying was performed in a forced draft circulation furnace at 120°C for 15 minutes followed by a further heat treatment at 340°C for 30 minutes to form a coating film with a film thickness of 8 to 10 µm. The coating environment was 25°C with humidity of 60% RH.

Furthermore, a powder coating was applied to a base material using a stainless steel sieve (JIS Z8801 compliant) with a mesh opening of 180 µm and linear spacing of 126 µm on an aluminum base material coated with the aforementioned primer in the powder coating composition of an example to be described later. After coating, and after being subjected to heating and firing for 20 minutes at 380°C in a forced draft circulation furnace, the material was cooled at room temperature to form a coating film. By adjusting the coating amounts, two types of coating films - one with a film thickness of 200 µm and one with a film thickness of 60 µm - were obtained.

### EXAMPLES

### Example 1

An amount of 35.6 g of a fluorinated solvent (Vertrel (Registered Trademark) Suprion, manufactured by Du Pont-Mitsui Fluorochemicals Co., Ltd.), 8.89 g of PFPE (decomposition temperature: 426°C) as fluoro oil, and 4.99 g of a fluorochemical surfactant (Capstone (Registered Trademark) FS-31 (nonion type fluorochemical surfactant 25% aqueous solution), manufactured by Chemours Company) were put in a 1 liter stainless steel beaker, and then, stirred for five minutes at 480 rpm using a down flow type propeller type 4-bladed stirrer. Then, 200 g of EJ-CL500 (average particle diameter of included PFA: approximately 0.2 µm, melting point: 309°C, PFA polymer solid content: 37 wt%), which is a fluoropolymer (PFA) water based coating for top coating manufactured by Du Pont-Mitsui Fluorochemicals Co., Ltd., was added, and the contents were stirred for an additional 15 minutes. The above blend was heated in a water bath at approximately 70°C for 1 hour while being stirred to volatilize the fluorinated solvent, and thereby a fluoropolymer coating composition was obtained. The obtained coating composition was coated onto an aluminum base material which had been subjected to a primer treatment using the method described above, and thereby a coating film sample was produced. (Contained amount of fluoro oil with respect to the total weight of the polymer solid content (fluoropolymer) and the fluoro oil of the fluoropolymer coating composition: 10.7 wt%)

### Example 2

Except that the amount of the fluorinated solvent was 80 g, the amount of the fluoro oil was 20 g, and the amount of the fluorochemical surfactant was 6.12 g, a coating composition was prepared and a coating film sample was produced in the same way as in Example 1. (Contained amount of fluoro oil with respect to the total weight of the polymer solid content (fluoropolymer) and the fluoro oil of the fluoropolymer coating composition: 21.3 wt%)

### Example 3

Except that the amount of the fluorinated solvent was 16.8 g, the amount of the fluoro oil was 4.21 g, and the amount of the fluorochemical surfactant was 4.51 g, a coating composition was prepared and a coating film sample was produced in the same way as in Example 1. (Contained amount of fluoro oil with respect to the total weight of the polymer solid content (fluoropolymer) and the fluoro oil of the fluoropolymer coating composition: 5.38 wt%)

### Example 4

Except that the amount of the fluorinated solvent was 137 g, the amount of the fluoro oil was 34.3 g, and the amount of the fluorochemical surfactant was 7.58 g, a coating composition was prepared and a coating film sample was produced in the same way as in Example 1. (Contained amount of fluoro oil with respect to the total weight of the polymer solid content (fluoropolymer) and the fluoro oil of the fluoropolymer coating composition: 31.7 wt%)

### Example 5

Except that the amount of the fluorinated solvent was 213 g, the amount of the fluoro oil was 53.3 g, and the amount of the fluorochemical surfactant was 9.52 g, a coating composition was prepared and a coating film sample was produced in the same way as in Example 1. (Contained amount of fluoro oil with respect to the total weight of the polymer solid content (fluoropolymer) and the fluoro oil of the fluoropolymer coating composition: 41.9 wt%)

### Example 6

Except that the amount of the fluorinated solvent was 320 g, the amount of the fluoro oil was 80.0 g, and the amount of the fluorochemical surfactant was 12.2 g, a coating composition was prepared and a coating film sample was produced in the same way as in Example 1. (Contained amount of fluoro oil with respect to the total weight of the polymer solid content (fluoropolymer) and the fluoro oil of the fluoropolymer coating composition: 51.9 wt%)

### Example 7

Except that the amount of the fluorinated solvent was 480 g, the amount of the fluoro oil was 120 g, and the amount of the fluorochemical surfactant was 16.3 g, a coating composition was prepared and a coating film sample was produced in the same way as in Example 1. (Contained amount of fluoro oil with respect to the total weight of the polymer solid content (fluoropolymer) and the fluoro oil of the fluoropolymer coating composition: 61.9 wt%)

### Example 8

Without using the fluorinated solvent or the fluorochemical surfactant, 8.89 g of PFPE (decomposition temperature: 426°C) as fluoro oil and 200 g of EJ-CL500 (average particle diameter of included PFA: approximately 0.2 µm, melting point: 309°C, PFA polymer solid content: 37 wt%), which is a fluoropolymer (PFA) water based coating for top coating manufactured by Du Pont-Mitsui Fluorochemicals Co., Ltd., were inserted into a 1 liter stainless steel beaker, and then stirred for 15 minutes at 480 rpm using a down flow type propeller type 4-bladed stirrer. The obtained coating composition was coated onto an aluminum base material which had been subjected to a primer treatment using the method described above, and thus a coating film sample was produced. (Contained amount of fluoro oil with respect to the total weight of the polymer solid content (fluoropolymer) and the fluoro oil of the fluoropolymer coating composition: 10.7 wt%)

### Example 9

Except that 20.0 g of fluoro oil was added so that the amount of said fluoro oil became 21.3 wt% with respect to the total weight of the polymer solid content (fluoropolymer) and the fluoro oil of the coating composition, a coating composition was prepared and a coating film sample was produced in the same way as in Example 8.

### Example 10

Except that 0.81 g of fluoro oil was added so that the amount of said fluoro oil became 1.08 wt% with respect to the total weight of the polymer solid content (fluoropolymer) and the fluoro oil of the coating composition, a coating composition was prepared and a coating film sample was produced in the same way as in Example 8.

### Example 11

Except that 4.21 g of fluoro oil was added so that the amount of said fluoro oil became 5.38 wt% with respect to the total weight of the polymer solid content (fluoropolymer) and the fluoro oil of the coating composition, a coating composition was prepared and a coating film sample was produced in the same way as in Example 8.

### Examples 12 to 15

Except that PFPE (decomposition temperature: 409°C) was used as the fluoro oil, coating compositions were prepared and coating film samples were produced in the same way as in Examples 8 to 11.

### Example 16

Except that PFPE (decomposition temperature: 409°C) was used as the fluoro oil, and 34.3 g of fluoro oil was added so that the amount of said fluoro oil became 31.7 wt%, a coating composition was prepared and a coating film sample was produced in the same way as in Example 8.

### Example 17

An amount of 44.4 g of a fluorinated solvent (Vertrel (Registered Trademark) Suprion, manufactured by Du Pont-Mitsui Fluorochemicals Co., Ltd.), 11.1 g of the PFPE of Example 1 as fluoro oil, and 3.1 g of the fluorochemical surfactant (Capstone (Registered Trademark) FS-31) were inserted into a 1 liter stainless steel beaker, and then, stirred for five minutes at 240 rpm using a down flow type propeller type 4-bladed stirrer, after that, 339 g of an aqueous dispersion (average particle diameter of included PFA: approximately 0.2 µm, melting point: 309°C, PFA polymer solid content: 30 wt%) of PFA (TFE/PPVE copolymer) obtained using a method in accordance with a well-known PFA emulsion polymerization method (Patent JP5470044B2) was added, and the contents were stirred for an additional 15 minutes. Finally, 9 mL of 60% nitric acid was added while the contents were stirred to coagulate fluoropolymer primary particles and the fluoro oil together (co-coagulation), and thus a gel-like coagulate was obtained. An amount of 26.6 g of a fluorinated solvent (Vertrel (Registered Trademark) XF, manufactured by Du Pont-Mitsui Fluorochemicals Co., Ltd.) was added, and then, after being stirred for an additional five minutes at 350 rpm, the contents were separated from an aqueous medium to thus obtain a composite coagulated and granulated product of fluorine oil / fluoropolymer (PFA). The product was then put back in pure water, stirred, and washed. After being washed five times, the obtained coagulated and granulated product was dried for three hours as 150°C, and then a portion, having been further subjected to heat treating at 280°C for one hour, was pulverized for 20 seconds using a small pulverizer (KSMAX, manufactured by Taninaka Co., Ltd.) to thus obtain a fluoro oil / fluoropolymer (PFA) powder coating composition.

The obtained powder coating composition was powder coated onto an aluminum base material which had been subjected to a primer treatment using the method described above, and thus a coating film having a film thickness of 200 µm was formed.

### Example 18

The powder coating composition obtained in Example 17 was powder coated onto an aluminum base material which had been subjected to a primer treatment using the method described above, and thus a coating film having a film thickness of 60 µm was formed.

### Example 19

An amount of 8.22 g of PFPE (decomposition temperature: 426°C) as fluoro oil, and 16.44 g of a fluorochemical surfactant (Capstone (Registered Trademark) FS-31 (nonion type fluorochemical surfactant 25% aqueous solution)), manufactured by Chemours Company) were inserted into a 1 liter stainless steel beaker, and then subjected to an ultrasonic dispersion treatment for five minutes using an ultrasonic generator (UE-100Z28S-8A Ultrasonic Generator, manufactured by Ultrasonic Engineering Co., Ltd.). To this was added 200 g of EJ-CL500 (average particle diameter of included PFA: approximately 0.2 µm, melting point: 309°C, PFA polymer solid content: 37 wt%), which is a fluoropolymer (PFA) water based coating for top coating manufactured by Du Pont-Mitsui Fluorochemicals Co., Ltd., and then, the contents were stirred for 15 minutes at 480 rpm using a down flow type propeller type 4-bladed stirrer to obtain a fluoropolymer coating composition.

The obtained coating composition was coated onto an aluminum base material which had been subjected to a primer treatment using the method described above, and thus a coating film sample was produced. (Contained amount of fluoro oil with respect to the total weight of the polymer solid content (fluoropolymer) and the fluoro oil of the fluoropolymer coating composition: 10.0 wt%)

### Example 20

An amount of 2.04 g of aluminum oxide (ALUMINA A16 SG, average particle diameter (D50): 0.55 µm, manufactured by Almatis, Inc.) mixed with alcohol for dispersion was added as a filler to the 200 g of the fluoropolymer coating composition obtained in Example 19, and then, the contents were stirred for an additional 10 minutes to thus obtain a fluoropolymer coating composition. (At this time the amount of the filler was 3 wt% with respect to a coating solid content (total amount of the fluoropolymer and the filler).)

The obtained coating composition was coated onto an aluminum base material which had been subjected to a primer treatment using the method described above, and thus a coating film sample was produced. (Contained amount of fluoro oil with respect to the total weight of the polymer solid content (fluoropolymer) and the fluoro oil of the fluoropolymer coating composition: 10.0 wt%)

### Example 21

Except that 4.21 of the aluminum oxide (ALUMINA A16 SG, average particle diameter: 0.55 µm, manufactured by Almatis, Inc.) was used, a coating composition was prepared and a coating film sample was produced in the same way as in Example 20. (At this time the amount of the filler was 6 wt% with respect to a coating solid content (total amount of the fluoropolymer and the filler).) (Contained amount of fluoro oil with respect to the total weight of the polymer solid content (fluoropolymer) and the fluoro oil of the fluoropolymer coating composition: 10.0 wt%)

### Example 22

Except that 0.67 g of a silicon carbide powder (GC#3000, average particle diameter (D50): 4 µm, manufactured by Fujimi Incorporated) was used as the filler, a coating composition was prepared and a coating film sample was produced in the same way as in Example 20. (At this time the amount of the filler was 1 wt% with respect to a coating solid content (total amount of the fluoropolymer and the filler).) (Contained amount of fluoro oil with respect to the total weight of the polymer solid content (fluoropolymer) and the fluoro oil of the fluoropolymer coating composition: 10.0 wt%)

### Example 23

Except that 2.04 g of a silicon carbide powder (GC#3000, average particle diameter (D50): 4 µm, manufactured by Fujimi Incorporated) was used as the filler, a coating composition was prepared and a coating film sample was produced in the same way as in Example 20. (At this time the amount of the filler was 3 wt% with respect to a coating solid content (total amount of the fluoropolymer and the filler).) (Contained amount of fluoro oil with respect to the total weight of the polymer solid content (fluoropolymer) and the fluoro oil of the fluoropolymer coating composition: 10.0 wt%)

### Example 24

Except that 4.21 g of a silicon carbide powder (GC#3000, average particle diameter (D50): 4 µm, manufactured by Fujimi Incorporated) was used as the filler, a coating composition was prepared and a coating film sample was produced in the same way as in Example 20. (At this time the amount of the filler was 6 wt% with respect to a polymer solid content (total amount of the fluoropolymer and the filler).) (Contained amount of fluoro oil with respect to the total weight of the polymer solid content (fluoropolymer) and the fluoro oil of the fluoropolymer coating composition: 10.0 wt%)

### Example 25

Except that 0.67 g of a silicon carbide powder (P600, average particle diameter (D50): 25.8 µm, manufactured by ESK-SiC, GmbH) was used as the filler, a coating composition was prepared and a coating film sample was produced in the same way as in Example 20. (At this time the amount of the filler was 1.25 wt% with respect to a coating solid content (total amount of the fluoropolymer and the filler).) (Contained amount of fluoro oil with respect to the total weight of the polymer solid content (fluoropolymer) and the fluoro oil of the fluoropolymer coating composition: 10.0 wt%)

### Example 26

Except that 2.044 g of a silicon carbide powder (P600, average particle diameter (D50): 25.8 µm, manufactured by ESK-SiC, GmbH) was used as the filler, a coating composition was prepared and a coating film sample was produced in the same way as in Example 20. (At this time the amount of the filler was 3 wt% with respect to a coating solid content (total amount of the fluoropolymer and the filler).) (Contained amount of fluoro oil with respect to the total weight of the polymer solid content (fluoropolymer) and the fluoro oil of the fluoropolymer coating composition: 10.0 wt%)

### Example 27

An amount of 5.10 g of an aqueous emulsion of a thermosetting imide (REZEM IM-3, imide concentration: 40 wt%, manufactured by Chukyo Yushi, Co., Ltd.) was added as a filler to 200 g of the fluoropolymer coating composition obtained in Example 19, and then, the contents were stirred an additional 10 minutes to thus obtain a fluoropolymer coating composition. (At this time the amount of the filler (solid content) was 3 wt% with respect to a coating solid content (total amount of the fluoropolymer and the filler (solid content).

The obtained coating composition was coated onto an aluminum base material which had been subjected to a primer treatment using the method described above, and thus a coating film sample was produced. (Contained amount of fluoro oil with respect to the total weight of the polymer solid content (fluoropolymer) and the fluoro oil of the fluoropolymer coating composition: 10.0 wt%)

### Example 28

Except that 10.53 g of the aqueous emulsion of a thermosetting imide (REZEM IM-3, imide concentration: 40 wt%, manufactured by Chukyo Yushi, Co., Ltd.) was added as a filler, a coating composition was prepared and a coating film sample was produced in the same way as in Example 27. (At this time the amount of the filler (solid content) was 6 wt% with respect to a coating solid content (total amount of the fluoropolymer and the filler (solid content).) (Contained amount of fluoro oil with respect to the total weight of the polymer solid content (fluoropolymer) and the fluoro oil of the fluoropolymer coating composition: 10.0 wt%)

### Example 29

Except that 21.06 g of a silica aqueous dispersion (SNOWTEX C, silica concentration: 20 wt%, particle diameter (D50): 10 to 15 nm, manufactured by Nissan Chemical Industries, Ltd.) was used as the filler, a coating composition was prepared and a coating film sample was produced in the same way as in Example 27. (At this time the amount of the filler (solid content) was 6 wt% with respect to a coating solid content (total amount of the fluoropolymer and the filler (solid content).) (Contained amount of fluoro oil with respect to the total weight of the polymer solid content (fluoropolymer) and the fluoro oil of the fluoropolymer coating composition: 10.0 wt%)

### Comparative Example 1

The fluoropolymer (PFA) water based coating for top coating (EJ-CL500, PFA average particle diameter: approximately 0.2 µm, melting point (ASTMD 3307 compliant): 309°C), manufactured by Du Pont-Mitsui Fluorochemicals Co., Ltd.), which was used in Example 1, was used to coat a base material that had been subjected to a primer treatment using the aforementioned method, and thus a coating film sample was produced.

### Comparative Example 2

Except that 2-perfluorohexyl-ethyl methacrylate with a decomposition temperature of 111°C was used as the fluoro oil, a coating composition was prepared and a coating film sample was produced in the same way as in Example 8.

### Comparative Example 3

Except that 13.68 g (fluoro oil of 8.89 g) of a PFPE composition was added as the fluoro oil using a composition (Nikkol NET-HC-04, PFPE 65 wt%, manufactured by Nikko Chemicals Co., Ltd.) containing PFPE having a decomposition temperature of 227°C, a coating composition was prepared and a coating film sample was produced in the same way as in Example 1. (Contained amount of fluoro oil with respect to the total weight of the polymer solid content (fluoropolymer) and the fluoro oil of the fluoropolymer coating composition: 10.7 wt%)

### Comparative Example 4

An amount of 200 g of EJ-CL500 (average particle diameter of included PFA: approximately 0.2 µm, melting point: 309°C, PFA polymer solid content: 37 wt%), which is a fluoropolymer (PFA) water based coating for top coating manufactured by Du Pont-Mitsui Fluorochemicals Co., Ltd., was inserted a one liter stainless steel beaker, then 2.29 g of aluminum oxide (ALUMINA A16 SG, average particle diameter (D50): 0.55 µm, manufactured by Almatis, Inc.) mixed with alcohol for dispersion was added as a filler, and then, the contents were stirred for 15 minutes at 480 rpm using a down flow type propeller type 4-bladed stirrer to thus obtain a fluoropolymer coating composition. (At this time the amount of the filler was 3 wt% with respect to a coating solid content (total amount of the fluoropolymer and the filler).)

The obtained coating composition was coated onto an aluminum base material which had been subjected to a primer treatment using the method described above, and thus a coating film sample was produced.

### Comparative Example 5

An amount of 200 g of EJ-CL500 (average particle diameter of included PFA: approximately 0.2 µm, melting point: 309°C, PFA polymer solid content: 37 wt%), which is a fluoropolymer (PFA) water based coating for top coating manufactured by Du Pont-Mitsui Fluorochemicals Co., Ltd. was inserted into a one liter stainless steel beaker, then 1.87 g of an aqueous emulsion of a thermosetting imide (REZEM IM-3, imide concentration: 40 wt%, manufactured by Chukyo Yushi, Co., Ltd.) was added as a filler, and then, the contents were stirred for 15 minutes at 480 rpm using a down flow type propeller type 4-bladed stirrer to thus obtain a fluoropolymer coating composition. (At this time the amount of the filler was 1 wt% with respect to a coating solid content (total amount of the fluoropolymer and the filler).)

The obtained coating composition was coated onto an aluminum base material which had been subjected to a primer treatment using the method described above, and thus a coating film sample was produced.

### Comparative Example 6

Except that 5.72 g of the aqueous emulsion of a thermosetting imide (REZEM IM-3, imide concentration: 40 wt%, manufactured by Chukyo Yushi, Co., Ltd.) was added as the filler, a coating composition was prepared and a coating film sample was produced in the same way as in Comparative Example 5. (At this time the amount of the filler (solid content) was 3 wt% with respect to a coating solid content (total amount of the fluoropolymer and the filler (solid content).)

### Comparative Example 7

Except that 23.62 g of a silica aqueous dispersion (SNOWTEX C, silica concentration: 20 wt%, particle diameter (D50): 10 to 15 nm, manufactured by Nissan Chemical Industries, Ltd.) was used as the filler, a coating composition was prepared and a coating film sample was produced in the same way as in Comparative Example 5. (At this time the amount of the filler (solid content) was 6 wt% with respect to a coating solid content (total amount of the fluoropolymer and the filler (solid content).)

**Table 1**

| Example (Ex) or Comparative Example (CEx) No. | Fluoro oil | | Coating formation / Prep. process | | | | | | | Coating film performance | |
|---|---|---|---|---|---|---|---|---|---|---|---|
| | Product Name | Fluoro oil decomposition temp. | Use of surfactant | Dilution of fluoro oil | Dispersion by ultrasonic | Concentration of Fluoro oil in coating | State of fluoro oil dispersion in coating | Addition of filler | State of coating formation | Fluoro oil coating remaining (film) | n-hexadeca ne contact angle [°] |
| Ex 3 | PFPE | 426°C | Y | Y | N | 5.4% | Favorable | None | Favorable | 3.3% | 71.9 |
| Ex 1 | | | Y | Y | N | 10.7% | Favorable | None | Favorable | 6.5% | 71.5 |
| Ex 2 | | | Y | Y | N | 21.3% | Favorable | None | Favorable | 11.0% | 70.8 |
| Ex4 | | | Y | Y | N | 31.7% | Favorable | None | Unevenness (no defects) | 15.8% | 71.3 |
| Ex5 | | | Y | Y | N | 41.9% | Favorable | None | Generation of defects | 23.1% | 71.1 |
| Ex 6 | | | Y | Y | N | 51.9% | Favorable | None | Generation of defects | 32.5% | 71.7 |
| Ex 7 | | | Y | Y | N | 61.9% | Favorable | None | Generation of defects | 35.7% | 71.4 |
| Ex 10 | | | N | N | N | 1.1% | Favorable | None | Favorable | 0.3% | 61.1 |
| Ex 11 | | | N | N | N | 5.4% | Favorable | None | Favorable | 1.0% | 61.6 |
| Ex8 | | | N | N | N | 10.7% | Inferior | None | Favorable | 2.0% | 69.3 |
| Ex9 | | | N | N | N | 21.3% | Inferior | None | Favorable | 6.3% | 71.2 |
| Ex19 | | | Y | N | Y | 10.0% | Favorable | None | Favorable | 7.0% | 73.1 |
| Ex 20 | | | Y | N | Y | to. 0% | Favorable | Alumina 3% | Favorable | 9.5% | 70.8 |
| Ex 21 | | | Y | N | Y | 10.0% | Favorable | Alumina 6% | Favorable | 7.3% | 73.1 |
| Ex 22 | | | Y | N | Y | 10.0% | Favorable | SiC(4um)1% | Favorable | Not measured | 71.5 |
| Ex 23 | | | Y | N | Y | 10.0% | Favorable | SiC(4um)3% | Favorable | 5.8% | 73.8 |
| Ex 24 | | | Y | N | Y | 10.0% | Favorable | SiC(4um)6% | Favorable | 7.6% | 73.6 |
| Ex 25 | | | Y | N | Y | 10.0% | Favorable | SiC(25.8 um)1% | Favorable | Not measured | 69.6 |
| Ex 26 | | | Y | N | Y | 10.0% | Favorable | SiC(25.8 um) | Favorable | 4.4% | 71.1 |
| | | | | | | | | 3% | | | |
| Ex 27 | | | Y | N | Y | 10.0% | Favorable | PI 3% | Favorable | 8.3% | 72.5 |
| Ex 28 | | | Y | N | Y | 10.0% | Favorable | PI 6% | Favorable | 8,8% | 71.5 |
| Ex 29 | | | Y | N | Y | 10.0% | Favorable | Silica 6% | Favorable | 8.9% | 68.6 |
| Ex 14 | PFPE | 409°C | N | N | N | 1.1% | Favorable | | Favorable | Not measured | 59.8 |
| Ex 15 | | | N | N | N | 5.4% | Favorable | | Favorable | 1.9% | 61.9 |
| Ex 12 | | | N | N | N | 10.7% | Inferior | | Favorable | 4.4% | 65.8 |
| Ex 13 | | | N | N | N | 21.3% | Inferior | | Favorable | 6.0% | 66.9 |
| Ex 16 | | | N | N | N | 31.7% | Inferior | | Favorable | 8.2% | 71.0 |
| CEx 1 | Not added | | - | - | - | - | - | | Favorable | | 56.4 |
| CEx 4 | | | - | - | - | - | - | Alumina 3% | Favorable | - | 55.3 |
| CEx5 | | | - | - | - | - | - | PI 1% | Favorable | - | 56.6 |
| CEx5 CEx6 | | | - | - | - | - | - | PI 3% | Favorable | - | 57.0 |
| CEx7 | | | - | | - | - | - | Silica 6% | Favorable | - | 56.5 |
| Cex2 | 2-perfluoro hexyl-ethyl methacr ylate | 111°C | N | N | N | 10.7% | Favorable | | Favorable | Undetectable | 55.7 |
| Comparative example 3 | PFPE | 227°C | Y | Y | N | 10.7% | Favorable | | Favorable | Undetectable | 55.3 |

**Table 2**

| | | | Coating film appearance | Coating film performance |
|---|---|---|---|---|
| | | | | n-hexadecane contact angle [°] |
| Ex 17 | Powder coating | Thickness: 200 um | Favorable | 70.4 |
| Ex 18 | Powder coating | Thickness: 60 um | Favorable | 71.9 |

**Table 3**

| | Coating preparation process | | | State of coating | | | Coating film performance | |
|---|---|---|---|---|---|---|---|---|
| | Use of surfactant | Dilution of fluoro oil | Dispersion of ultrasonic waves | Concentratio n of F oil in coating | State of fluoro oil dispersion in coating | F oil droplet particle diameter | Fluoro oil coating remaining (film) | n-hexadecane contact angle [°] |
| Ex 1 | Y | Y | N | 10.7% | Favorable | 8.4 | 6.5% | 71.5 |
| Ex 8 | N | N | N | 10.7% | Inferior | 185 | 2.0% | 69.3 |
| Ex 19 | Y | N | Y | 10.0% | Favorable | 5.9 | 7.0% | 73.1 |

**Table 4**

| | Sugar soy sauce (whole surface application) [kgf] | | |
|---|---|---|---|
| | (Initial) Sugar soy sauce | 5th time | After heat treating |
| Ex 3 | 0 | 0 | 0 |
| Ex 1 | 0 | 0 | 0 |
| Ex 2 | 0 | 0 | 0 |
| Cex 1 | 14.3 | 11.7 | 12.1 |

**Table 6**

| | Tribometer measurement | | |
|---|---|---|---|
| | Static coefficient of friction | Dynamic coefficient of friction (50th) | Dynamic coefficient of friction (500th) |
| Ex 3* | 0.029 | 0.017 | 0.026 |
| Ex 1 | 0.030 | 0.015 | 0.014 |
| Ex2 | 0.021 | 0.016 | 0.009 |
| CEx 1 | 0.040 | 0.022 | 0.022 |

| | | | |
|---|---|---|---|
| **It is conjectured that the coefficient of friction at the 500th cycle increased in Ex 3 because the Fluoro oil ran out.* | | | |

**Table 6**

| | Fluoro oil | | Coating formation / Prep. process | | | | | | |
|---|---|---|---|---|---|---|---|---|---|
| | Product Name | Fluoro oil decomposition temp. | Use of surfactant | Dilution of fluoro oil | Dispersion of ultrasonic waves | Concentration of F oil in coating | Addition of filler | n-hexadecane contact angle [°] | Amount of wear caused by Suga Wear Testing Machine after 100 reciprocations with a 1 N load (mg) |
| Ex 19 | PFPE | 426°C | Y | N | Y | 10.0% | None | 73.1 | 2 |
| Ex 22 | | | Y | N | Y | 10.0% | SiC(4 um)]% | 71.5 | 1.7 |
| Ex 23 | | | Y | N | Y | 10.0% | SiC(4 um) 3% | 73.8 | 1.9 |
| Ex 25 | | | Y | N | Y | 10.0% | SiC(25.8 um)1% | 69.6 | 1 |
| Ex 26 | | | Y | N | Y | 10.0% | SiC(25.8 um) 3% | 71.1 | 1.1 |
| Ex 27 | | | Y | N | Y | 10.0% | PI 3% | 72.5 | 1.6 |
| Ex 29 | | | Y | N | Y | 10.0% | Silica 6% | 68.6 | 1.7 |
| CEx 1 | Not added | - | - | - | - | - | | 56.4 | 5.1 |
| CEx4 | | | - | - | - | - | Alumina 3% | 55.3 | 1.3 |
| CEx 5 | | | - | - | - | - | PI 1% | 56.6 | 1.4 |
| CEx 6 | | | - | - | - | - | PI 3% | 57.0 | 1.6 |
| CEx 7 | | | - | - | - | - | Silica 6% | 56.5 | 1.6 |

As is clear from Table 6, the wear resistance of coatings in which the fluoro oil according to the present invention had been dispersed is improved. What is also understood, is that wear resistance is further improved by adding a filler, such as silicon carbide (SiC), polyimide (PI) and silica.

### Industrial Applicability

The coating composition for a mold according to the present invention is able to form coatings that are able to exhibit excellent non-adhesiveness (releasability) and water and oil repellency over a long period of time, and also has excellent wear resistance, and can thus be appropriately used in the formation of top coating layers for enhancing the releasability of forming molds.

## Claims

1. A mold, wherein a coating film made from a fluoropolymer coating composition is formed on a surface of said mold, the fluoropolymer coating composition comprising a fluoropolymer and a fluoro oil, wherein the decomposition temperature of said fluoro oil is higher than the melting point of said fluoropolymer, said decomposition temperature is measured as disclosed in the section titled *"Decomposition Temperature of the Fluoro Oil",* wherein said melting point is measured as disclosed in the section titled *"Melting Point of the Fluoropolymer"* and wherein said fluoro oil is dispersed in said coating composition.

2. The mold of claim 1, wherein said fluoro oil is contained in an amount such that said fluoro oil is 1 to 35 wt% of the total amount of the polymer solid content and said fluoro oil in said coating composition.

3. The mold of claim 1, wherein the decomposition temperature of said fluoro oil is at least 10°C higher than the melting point of said fluoropolymer.

4. The mold of claim 1, wherein said fluoro oil is dispersed in said coating composition as particles having an average particle diameter of 20 µm or less, the average particle diameter being determined as disclosed in the section *"Average Particle Diameter of the Fluoro Oil Particles in the Coating".*

5. The mold of claim 1, wherein said fluoropolymer coating composition further comprises a surfactant.

6. The mold of claim 1, wherein said fluoropolymer is a melt-processable perfluoropolymer.

7. The mold of claim 1, wherein said fluoropolymer coating composition further comprises a filler.

8. The mold of claim 7, wherein said filler is contained in an amount of 0.1 to 10 wt% based on the total solids content of said coating composition.

9. The mold of claim 1, wherein said coating composition is a top coat.

10. A coating film forming method, wherein a fluoropolymer coating composition comprising a fluoropolymer and a fluoro oil is coated on a surface of a mold, wherein said fluoro oil is dispersed in said coating composition and wherein the decomposition temperature of said fluoro oil is higher than the melting point of said fluoropolymer, said decomposition temperature is measured as disclosed in the section titled *"Decomposition Temperature of the Fluoro Oil"* and wherein said melting point is measured as disclosed in the section titled *"Melting Point of the Fluoropolymer",* and then said composition is heat treated to a temperature of at least the melting point of said fluoropolymer.

11. Use of a fluoropolymer coating composition as defined in claim 1 for coating the surface of a mold.

## Patentansprüche

1. Form, wobei ein Beschichtungsfilm, der aus einer Fluorpolymerbeschichtungszusammensetzung hergestellt wird, auf einer Oberfläche der Form gebildet wird, wobei die Fluorpolymerbeschichtungszusammensetzung ein Fluorpolymer und ein Fluoröl umfasst, wobei die Zersetzungstemperatur des Fluoröls höher als der Schmelzpunkt des Fluorpolymers ist, die Zersetzungstemperatur wie im Abschnitt mit dem Titel *"Zersetzungstemperatur des Fluoröls"* offenbart gemessen wird, wobei der Schmelzpunkt wie im Abschnitt mit dem Titel *"Schmelzpunkt des Fluorpolymers"* offenbart gemessen wird und wobei das Fluoröl in der Beschichtungszusammensetzung dispergiert wird.

2. Form nach Anspruch 1, wobei das Fluoröl in einer Menge enthalten ist, derart, dass das Fluoröl 1 bis 35 Gew.-% der Gesamtmenge des Polymerfeststoffgehalts und des Fluoröls in der Beschichtung beträgt.

3. Form nach Anspruch 1, wobei die Zersetzungstemperatur des Fluoröls mindestens 10°C höher als der Schmelzpunkt des Fluorpolymers ist.

4. Form nach Anspruch 1, wobei das Fluoröl in der Beschichtungszusammensetzung als Teilchen dispergiert ist, die einen durchschnittlichen Teilchendurchmesser von 20 µm oder weniger aufweisen, wobei der durchschnittliche Teilchendurchmesser wie im Abschnitt *"Durchschnittlicher Teilchendurchmesser der Fluorölteilchen in der Beschichtung"* offenbart bestimmt wird.

5. Form nach Anspruch 1, wobei die Fluorpolymerbeschichtungszusammensetzung ferner ein Tensid umfasst.

6. Form nach Anspruch 1, wobei das Fluorpolymer einen schmelzverarbeitbares Perfluorpolymer ist.

7. Form nach Anspruch 1, wobei die Fluorpolymerbeschichtungszusammensetzung ferner einen Füllstoff umfasst.

8. Form nach Anspruch 7, wobei der Füllstoff in einer Menge von 0,1 bis 10 Gew.-%, auf den gesamten Feststoffgehalt der Beschichtungszusammensetzung bezogen, enthalten ist.

9. Form nach Anspruch 1, wobei die Beschichtungszusammensetzung eine Deckschicht ist.

10. Beschichtungsfilmbildungsverfahren, wobei eine Fluorpolymerbeschichtungszusammensetzung, die ein Fluorpolymer und ein Fluoröl umfasst, schichtförmig auf eine Oberfläche einer Form aufgebracht wird, wobei das Fluoröl in der Beschichtungszusammensetzung dispergiert ist und wobei die Zersetzungstemperatur des Fluoröls höher als der Schmelzpunkt des Fluorpolymers ist, die Zersetzungstemperatur wie im Abschnitt mit dem Titel *"Zersetzungstemperatur des Fluoröls"* offenbart gemessen wird und wobei der Schmelzpunkt wie im Abschnitt mit dem Titel *"Schmelzpunkt des Fluorpolymers"* offenbart gemessen wird und
die Zusammensetzung dann auf eine Temperatur von mindestens dem Schmelzpunkt des Fluorpolymers hitzebehandelt wird.

11. Verwendung einer Fluorpolymerbeschichtungszusammensetzung wie in Anspruch 1 definiert, zum Beschichten der Oberfläche einer Form.

## Revendications

1. Moule, dans lequel un film de revêtement constitué d'une composition de revêtement de polymère fluoré est formé sur une surface dudit moule, la composition de revêtement de polymère fluoré comprenant un polymère fluoré et une huile fluorée, dans lequel la température de décomposition de ladite huile fluorée est supérieure au point de fusion dudit polymère fluoré, ladite température de décomposition étant mesurée tel que décrit dans la section intitulée « *Température de décomposition de l'huile fluorée* », ledit point de fusion étant mesuré tel que décrit dans la section intitulée « *Point de fusion du polymère fluoré* » et dans lequel ladite huile fluorée est dispersée dans ladite composition de revêtement.

2. Moule selon la revendication 1, dans lequel ladite huile fluorée est contenue en une quantité telle que ladite huile fluorée représente de 1 à 35 % en pds de la quantité totale de la teneur en matières solides polymères et de ladite huile fluorée dans ladite composition de revêtement.

3. Moule selon la revendication 1, dans lequel la température de décomposition de ladite huile fluorée est supérieure d'au moins 10°C au point de fusion dudit polymère fluoré.

4. Moule selon la revendication 1, dans lequel ladite huile fluorée est dispersée dans ladite composition de revêtement sous la forme de particules ayant un diamètre moyen de particule de 20 µm ou moins, le diamètre moyen de particule étant déterminé tel que décrit dans la section « *Diamètre moyen de particule des particules d'huile fluorée dans le revêtement »*.

5. Moule selon la revendication 1, dans lequel ladite composition de revêtement de polymère fluoré comprend en outre un tensioactif.

6. Moule selon la revendication 1, dans lequel ledit polymère fluoré est un polymère perfluoré pouvant être transformé à l'état fondu.

7. Moule selon la revendication 1, dans lequel ladite composition de revêtement de polymère fluoré comprend en outre une charge.

8. Moule selon la revendication 7, dans lequel ladite charge est contenue en une quantité de 0,1 à 10 % en pds sur la base de la teneur totale des matières solides de ladite composition de revêtement.

9. Moule selon la revendication 1, dans lequel ladite composition de revêtement est un revêtement de finition.

10. Procédé de formation d'un film de revêtement, dans lequel une composition de revêtement de polymère fluoré comprenant un polymère fluoré et une huile fluorée est revêtue sur une surface d'un moule, dans lequel ladite huile fluorée est dispersée dans ladite composition de revêtement et dans lequel la température de décomposition de ladite huile fluorée est supérieure au point de fusion dudit polymère fluoré, ladite température de décomposition étant mesurée tel que décrit dans la section intitulée « *Température de décomposition de l'huile fluorée* » et ledit point de fusion étant mesuré tel que décrit dans la section intitulée « *Point de fusion du polymère fluoré* », et ensuite ladite composition étant thermiquement traitée à une température d'au moins le point de fusion dudit polymère fluoré.

11. Utilisation d'une composition de revêtement de polymère fluoré telle que définie selon la revendication 1 pour le revêtement de la surface d'un moule.
